# EUROPEAN PATENT APPLICATION

(11) **EP 2 003 383 A2**
(43) Date of publication of application: **17.12.2008**
(21) Application number: 08002581.0
(22) Date of filing: 12.02.2008
(51) Int. Cl.: F16L 3/10, F16L 3/11

(54) **Quick mount for brackets supporting tubular elements**

(30) Priority: 19.02.2007 IT AN20070005
(71) Applicant: Diotallevi, Andrea, 60131 Ancona (IT); Volpe, Diego, 60124 Ancona (IT)
(72) Inventor: Diotallevi, Andrea, 60131 Ancona (IT); Volpe, Diego, 60124 Ancona (IT)
(74) Representative: Gentili, Enrico

(57) **Abstract**

Quick mount means (1, 2) for coupling the half brackets (4.a, 4.b) of a bracket (4) suitable for supporting a tubular element (6) are described.

Said quick mount means (1, 2) consist in a male element (1) and a female element (2), provided with a joint-wise mechanism (1.d, 2.a) capable of ensuring a firm constraint between said two half brackets (4.a, 4.b) when reciprocally coupled.

Said quick mount means (1, 2) may be elements separate from said half brackets (4.a, 4.b), being constrained thereto by flexible coupling means (1.b, 2.b); or they may be a single body with said half brackets (4.a, 4.b), being moulded in a single piece.

## Description

The object of the present finding is a quick mount system suitable for facilitating the closing and reopening of support brackets for tubular elements.

In particular, the present invention relates to the field of systems for fixing and anchoring ducts and piping for transporting gas, electric energy, sanitary water, heating, drains, and fluids in general, both inside and outside civil and industrial buildings.

It is commonly known that the most widely used brackets are composed of two components, generally with a semi-circular shape, which once coupled, make up the bracket suitable for fastening the tubular element.

The two ends of each of such two semi-circular components have flattened zones suitable for reciprocally coupling and constraining to each other by usual fixing means, such as screws, nails or the like.

One of the two semi-circular components has a threaded insert or hole in the middle, wherein a screw or a nail can be inserted for anchoring said component to the wall. Afterwards, the pipe is made to adhere to the semi-circular component fixed to the wall, and finally the second semi-circular component is applied, overlapping the two pairs of flattened ends on one another.

As mentioned above, said flattened zones obtained on the ends of each semi-circular component are reciprocally coupled to make up a flange, thanks to the presence of threaded holes and of holes for the insertion of screws, respectively in the component anchored to the wall and in the component to be overlapped.

A bracket of this type, of simple construction and effective functionality, however, has several drawbacks, one of which is having to hold the tubular element and the semi-circular component not anchored to the wall with one hand, whereas the two screws that keep the two semi-circular components connected must be concurrently screwed with the other hand. Related to such inconvenience of use, it often happens that said screws are not capable of easily grasping the threading made on the flattened zones of the ends of the semi-circular component anchored to the wall, with the consequence that the screw may fall on the floor, thus having to interrupt the operation and, if one is on a ladder, to get down to take it again. In conclusion, while these operations are not per se too complicated, they require time and sometimes, they imply coordination difficulties.

The aim of the present finding is to obviate at least a part of the drawbacks described above, by providing a quick mount system for brackets supporting tubular elements.

These and other aims that will appear more clearly hereinafter, are achieved according to the present invention by quick mount means having the features of the annexed claims, which are an integral part of the technical teaching provided herein in relation to the finding.

Further features of the present finding will appear more clearly from the following description of some preferred variants thereof, according to the patent claims and illustrated, by way of a non-limiting example, in the annexed drawings, wherein:
- figure 1 shows a schematic representation of the quick mount means according to the invention;
- figure 2 shows a bracket suitable for using the quick mount means of fig. 1, according to a first variant of the invention;
- figure 3 shows a view of the open bracket, provided with the quick mount means according to the invention;
- figure 4 shows what depicted in fig. 3, with closed bracket;
- figure 5 shows a variant of the bracket provided with the quick mount means according to the invention;
- figure 6 shows a perspective view of a closed bracket provided with the quick mount means according to a second variant of the invention;
- figures 7 and 8 show perspective views of the open bracket of fig. 6.

The features of the finding shall now be described using the references contained in the figures.

Reference numeral 4 denotes the bracket for supporting the tubular element 6, composed of the two semi-circular components 4.a and 4.b. While in the annexed figures said components 4.a and 4.b are always represented with a semi-circular shape, and accordingly, once coupled they are suitable for making a bracket 4 with circular shape, hereinafter they shall be referred to as "half brackets", both for convenience of description and in order to include any type of bracket 4 of any shape, that is, suitable for supporting tubular elements with circular, elliptical, square, rectangular section or any other shape.

According to the prior art, the half bracket 4.a is centrally provided with a threaded insert or hole 5, so as to be anchored to the wall by known fixing means, such as for example screws or nails.

Reference numerals 3.a, 3.b, 3.c and 3.d denote the holes made on the flattened ends of the two half brackets 4.a and 4.b, suitable for seating the quick mount means 1 and 2 object of the present invention.

Said quick mount means 1 and 2 are respectively composed of a male element 1 and a female element 2, suitably shaped so as to ensure a firm constraint by a joint-wise mechanism, when reciprocally coupled.

The male element is provided with a base 1.a provided with flexible coupling means, substantially consisting in a groove 1.b having one or more external grooves for imparting elasticity to said coupling means. An elongated shaft 1.c develops from said base 1.a, in a substantially orthogonal direction, at least one side whereof is provided with a serrated profile 1.d.

On the other hand, the female element 2 consists in a hollow body provided with a through hole 2.c and with a base 2.e, also, similarly to the male element 1, provided with flexible coupling means substantially consisting in a groove 2.b. A guiding shaft 2.d ending with a coupling tooth 2.a develops from said base 2.e, in a substantially orthogonal direction.

The male 1 and female 2 elements are positioned into the respective opposite holes (3.a, 3.b; 3.d, 3.c) of the two half brackets 4.a and 4.b. More precisely, said quick mount means 1 and 2 are inserted by a simple pressure in said holes 3.a, 3.b, 3.c, 3.d, with the respective bases 1.a and 2.e that act as travel end stop and the respective flexible coupling means 1.b and 2.b that are elastically coupled with the grooves of said holes.

Once said quick mount means 1 and 2 have been positioned on the half brackets 4.a and 4.b, it is possible to proceed with the operation for closing bracket 4, reciprocally coupling the male element 1 with the opposite female element 2: the elongated shaft 1.c of the male element 1 is inserted in the through hole 2.c of the female element 2, so that the serrated profile 1.d of shaft 1.c contacts the coupling tooth 2.a, thus forming a joint-wise mechanism.

Preferably, the half brackets 4.a and 4.b thus constrained can at first have a partial grip, so as to freely move the tubular element 6 inside bracket 4 and once this has reached the desired position, it is possible to continue with the coupling operation, up to the final locking of said tubular element 6 inside bracket 4.

Such final locking operation can be carried out manually or by common tools available to any installer, such as split joint pliers or pipe wrench. In any case, it should be noted that the joint-wise mechanism consisting of the constraint between the serrated profile 1.d of the male element 1 and the coupling tooth 2.a of the female element 2 is sufficiently firm also with a partial only insertion.

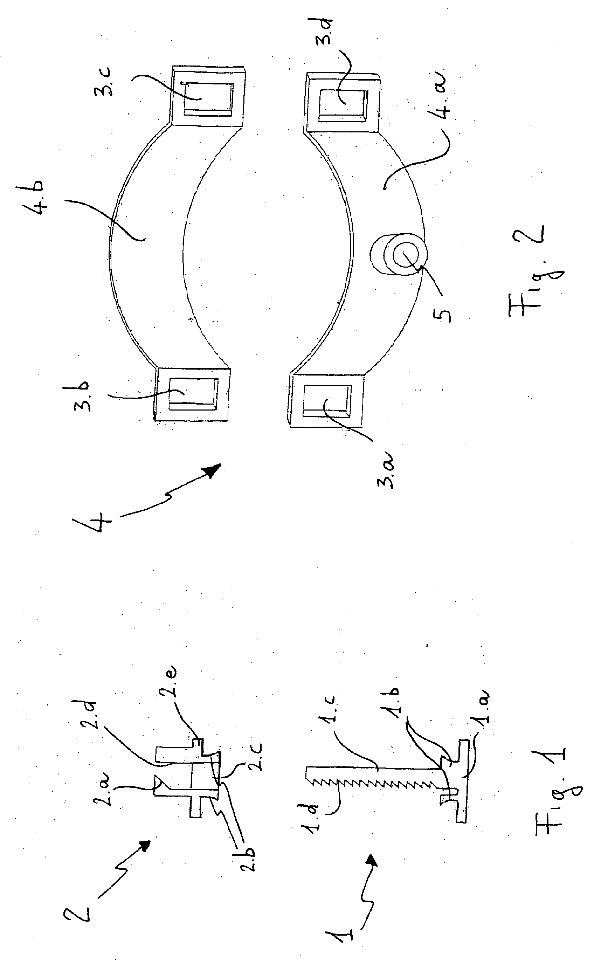

In the version shown in figs. 1 to 5, the quick mount means 1 and 2 are elements separate from the half brackets 4.a and 4.b, which are coupled thereto as described above. However, nothing prevents from making such half brackets already provided with the reciprocal male 1 and female 2 quick mount means object of the present invention, proceeding to the moulding of a single piece of a suitable material, such as for example plastic, metal or any other material suitable for operating the joint-wise mechanism.

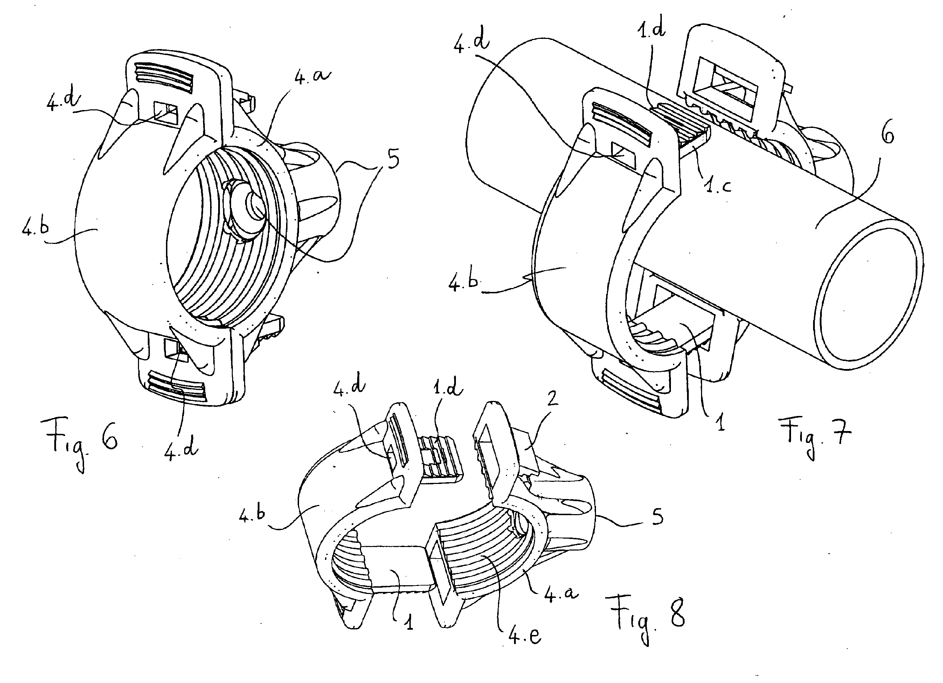

Figs. 6 to 8 show a second variant of the quick mount means 1 and 2 according to the present invention, wherein bracket 4 is composed of the two half brackets 4.a and 4.b already provided with said quick mount means.

In both variants described above, once bracket 4 has been closed, it can be easily reopened by a tool (for example a screwdriver), to be inserted in an appropriate slit 4.c or 4.d, in order to release the joint-wise mechanism created between the serrated profile 1.d of shaft 1.c of the male element 1 and the coupling tooth 2.a of the female element 2.

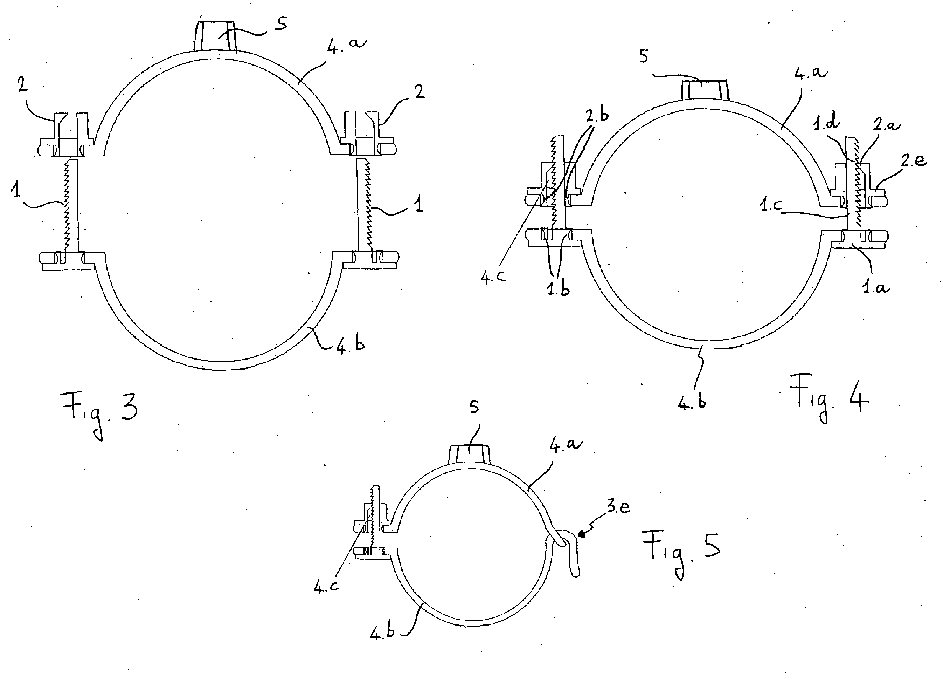

More in detail, in the variant shown in figs. 4 and 5 it is sufficient to lever up into slit 4.c, operating with the tool according to a direction substantially parallel to the wall whereon bracket 4 is fixed. Said slit 4.c consists, in the practice, in the space formed in the hollow body of the female element 2 and not engaged by shaft 1.c of the male element 1.

In the version shown in figs. 6 to 8, on the other hand, bracket 4 is reopened by levering up with the tool into slit 4.d, operating in a direction substantially perpendicular to the wall. Said slit 4.d is obtained at the flattened end of the half bracket 4.a or 4.b, and it also allows accessing the coupling between the coupling tooth 2.a and the serrated profile 1.d of shaft 1.c.

In conclusion, through slits 4.c and 4.d, it is possible to reopen and use bracket 4 provided with the quick mount means 1 and 2 as often as desired.

As can be understood from the description of the present finding, the main advantage of the quick mount means 1 and 2, in place of the usual fixing means known to date (self-threading screws, bolts with nut or similar means), consists in the easiness of use and in the features of convenience and quickness of use resulting therefrom.

It is clear that several variations of the quick mount means 1 and 2 object of the invention are possible to the man skilled in the art, without departing from the novelty scopes of the inventive idea, as well as it is clear that in the practical variant of the invention the various components described above may be replaced with technically equivalent ones.

In particular, the quick mount means 1 and 2 need not be on both pairs of ends of half brackets 4.a and 4.b, since they may also be provided on only one of said pair of ends, the other pair being coupled with alternative removable constraining means, such ass for example a hinge 3.e (see fig. 5), as in the prior art.

Moreover, the inside part of bracket 4 may be or not provided with a seal 4.e, of a material suitable for favouring the locking of the tubular element 6, in any case already ensured by the coupling between the male element 1 and the female element 2 of quick mount of said bracket 4.

It is also clear that the quick mount means 1 and 2 can be shaped in any manner and according to any geometrical shape, as it is sufficient that a firm constraint is ensured by a joint-wise mechanism, when reciprocally coupled.

For example, the elongated shaft 1.c may be provided with serrated profiles 1.d on both sides, thus engaging on a dual (or multiple) coupling tooth 2.a of the female element 2.

It is also possible to make the quick mount means 1 and 2 of any material suitable for the purpose, even different from the material bracket 4 is made of, or subject them to an identification colouring in order to signal the type of fluid contained in the tubular element.

## Claims

1. Quick mount means (1, 2) for coupling the half brackets (4.a, 4.b) of a bracket (4) suitable for supporting a tubular element (6),
**characterised in that**
they consist in a male element (1) and a female element (2), suitable for ensuring a firm constraint between said half brackets (4.a, 4.b) by a joint-wise mechanism (1.d, 2.a), when reciprocally coupled.

2. Quick mount means (1, 2) according to the previous claim,
**characterised in that**
said male (1) and female (2) elements are positioned, opposite one another, in the proximity of at least an opposite pair of the flattened ends of said half brackets (4.a, 4.b).

3. Quick mount means (1, 2) according to claim 2,
**characterised in that**
said male (1) and female (2) elements are bodies separate from the half brackets (4.a, 4.b), to said half brackets (4.a, 4.b) being constrained pressure-wise by flexible coupling means (1.b, 2.b).

4. Quick mount means (1, 2) according to the previous claim,
**characterised in that**
said flexible coupling means (1.b, 2.b) respectively consist in a groove obtained on the base (1.a) of the male element (1) and in a groove (2.b) obtained on the base (2.e) of the female element (2), said grooves (1.b, 2.b) elastically coupling with the grooves of the holes (3.a, 3.b, 3.c, 3.d) provided on at least one opposite pair of flattened ends of the half brackets (4.a, 4.b), and said bases (1.a, 2.e) acting as travel end stop in opposition to said holes (3.a, 3.b, 3.c, 3.d).

5. Quick mount means (1, 2) according to claim 2,
**characterised in that**
said male (1) and female (2) elements are a single body along with the half brackets (4.a, 4.b).

6. Quick mount means (1, 2) according to any previous claim,
**characterised in that**
the male element (1) is provided with an elongated shaft (1.c), at least one side whereof is provided with a serrated profile (1.d), said shaft (1.c) being suitable for inserting in the hollow body of the female element (2) provided with a through hole (2.c) and with a guiding shaft (2.d) ending with at least one coupling tooth (2.a), the constraint between said coupling tooth (2.a) and said serrated tooth (1.d) of said shaft (1.c) forming the joint-wise mechanism (1.d, 2.a) of claim 1.

7. Quick mount means (1, 2) according to any previous claim,
**characterised in that**
the joint-wise mechanism (1.d, 2.a) is releasable by an appropriate tool operating on releasing means (4.c, 4.d), suitable for causing the disconnection of the half brackets (4.a, 4.b) of the bracket (4).

8. Quick mount means (1, 2) according to the previous claim,
**characterised in that**
said release means consist in slits (4.c, 4.d) wherein said appropriate tool levers up, which acts in said first slit (4.c) according to a direction substantially parallel to the wall whereon the bracket (4) is fixed or acts in said second slit (4.d) according to a direction substantially perpendicular to the wall whereon said bracket (4) is fixed.

9. Quick mount means (1, 2) according to any previous claim,
**characterised in that**
said male (1) and female (2) elements are positioned, opposite one another, on both pairs of the flattened ends of the half brackets (4.a, 4.b).

10. Quick mount means (1, 2) according to any previous claim except for 9,
**characterised in that**
said male (1) and female (2) elements are positioned, opposite one another, on only one pair of the flattened ends of the half brackets (4.a, 4.b), the other pair being coupled to other removable constraining means, such as for example a hinge (3.e).

11. Quick mount means (1, 2) according to any previous claim,
**characterised in that**
they can be made with any material suitable for the purpose and in identification colours having the purpose of signalling the type of fluid contained in the tubular element (6) supported by the bracket (4).
